# EUROPEAN PATENT SPECIFICATION

(11) **EP 1 254 035 B1**
(45) Date of publication and mention of the grant of the patent: **04.05.2005**
(21) Application number: 01904690.3
(22) Date of filing: 01.02.2001
(51) Int. Cl.: B60D 1/167

(54) **DRAWBAR**
DEICHSEL
BARRE DE TRACTION

(30) Priority: 09.02.2000 SE 0000402
(43) Date of publication of application: 06.11.2002
(73) Proprietor: VBG Produkter AB, S-462 28 Vänersborg (SE)
(72) Inventor: ANDERSSON, Rangvald, S-467 94 Grästorp (SE)
(74) Representative: Lind, Urban
(86) International application number: PCT/SE2001/000180
(87) International publication number: WO 2001/058707

(56) References cited:
- EP-A1- 0 060 996
- DE-A1- 1 755 583
- DE-A1- 19 648 450
- DE-B- 1 267 104

## Description

### Field of the Invention

The present invention relates to a drawbar for trailers, especially heavy-duty trailers, comprising a front part adapted to be fixed to the traction vehicle and two legs adapted to be fixed to the trailer, the legs being connected to the front part to form a Y-shaped construction.

The invention also concerns a method for mounting a drawbar on a trailer.

### Background Art

Drawbars of the type above are used to a large extent for heavy-duty vehicles, i.e. vehicles with a trailer weighing approx. 20-50 t. According to prior art, they have legs which are made of square sections or possibly U-sections of steel and which are welded to fixing components, which in turn are welded or screwed to the front part, which is also made of steel. Usually there is also a rear bar welded between the leg ends fixed to the trailer. Such drawbars are known, for instance, from DE 196 48 450A.

There is a need for adjusting a drawbar as described above to different types of vehicles and situations. In particular, this applies to the fixing to the trailer, which may vary depending on the construction of the vehicle. This has been solved by mountings on said rear bar being correctly fixed in the lateral direction and then being finally welded, which is time-consuming. In the cases where the fixing to the trailer is positioned beside the fixing of the legs to the rear bar, undesirable moments about these points arise, which in the long run fatigue the welded joints and also the material of the legs and the rear bar. Alternatively, the drawbar has no rear bar, which means that there is no possibility of adjustment.

Moreover, rigid demands are nowadays placed on drawbars, which, inter alia, should pass test programs comprising 2 million cycles with a view to testing the strength of the drawbar. In this type of test it has been found that welded joints in the drawbar are very sensitive.

A type of drawbar without a rear bar, which besides to some extent uses screw joints instead of welded joints to the front part, is available on the market. For this drawbar to withstand the existing stress, the construction is reinforced with supporting irons which are arranged between the legs. Moreover fixing irons are welded to the leg ends facing the front part, in which fixing irons the screw joints are arranged.

The above-mentioned drawbar thus does not fully eliminate the need for welded joints and consequently does not solve the above-mentioned problems in a satisfactory way.

Another problem of these prior art drawbars is that in most cases they are unwieldy and difficult to handle, which makes handling and distribution complicated and expensive. Furthermore there is no satisfactory way of adjusting prior art drawbars to different types of vehicles. The components of the drawbars must therefore be manufactured in different dimensions and lengths so as to fit different types of vehicles.

### Summary of the Invention

The object of the present invention is to solve the above problem and to provide a drawbar which is adjustable to trailer variants that are available on the market. One more object of the invention is to provide a drawbar which is inexpensive to manufacture and has satisfactory strength.

This object is achieved by a drawbar of the type described in claim 1.

By the special design of the legs in the form of an open profile the depth of which is greatest at the point, for instance a corner, where said inclined short side ends, the contact surface between legs and front part is increased. Thus, the screw joints can be arranged over a relatively long distance so that the forces between legs and front part are taken up in a satisfactory way.

By this construction, a drawbar is provided, which completely without welded joints between legs and reinforcing irons, if any, can achieve satisfactory strength.

The design of the legs also results in a satisfactory screw joint with double frictional surfaces and a great pretensioning length.

The fact that the welded joints can be eliminated, with no need for additional supporting irons or fixing irons, implies that the drawbar is easier and less expensive to manufacture while at the same time it can be delivered in a non-mounted state. This results in reduced delivery costs for the usually very unwieldy drawbars.

Preferably each leg has a hole which is formed close to the web of the sectional element, and a hole which is formed close to the open side of the sectional element. This spreading of the holes maximally utilises the entire depth/width of the sectional element, which results in optimal strength.

According to an embodiment of the invention, at least one of said holes is elongate, so that the angular position of the leg in relation to the front part is adjustable. This possibility of adjustment is not to be found in currently available welded or screwed drawbars.

Preferably, the drawbar is further provided with a cover element with apertures, through which said screw joints extend. This cover element distributes the forces from the screw joints and contributes to keeping the legs connected to the front part.

The cover element preferably comprises two portions, which each extend a distance over the upper and lower sides of the legs in the direction of the second rear end of the respective legs, and in which one or more fixing apertures are formed in order to cooperate, with the aid of additional screw joints, with one or more fixing apertures which are formed in each leg.

During mounting of the drawbar on a trailer these fixing apertures can make it easier for the fitter to centre the front part in relation to the attachments in the trailer. Moreover, the fixing apertures of the screw joints help to take up lateral forces affecting the drawbar in use. There is still a risk that the lateral forces, despite the limited extent thereof relative to the tractive forces, will displace the screw joints in said elongate holes in legs and fixing means.

The cover sheet can also have bore indications for forming additional holes through the legs. For instance, a round hole acting as a centre of rotation and an elongate hole acting to allow turning, which are formed in a leg, could be supplemented with three hole indications which after fitting of the leg may be bored at the same time as the leg and be provided with screw joints. This results in a very strong screw joint between legs and front part.

### Brief Description of the Drawings

The present invention will now be described in more detail with reference to the accompanying drawings, which by way of example illustrate preferred embodiments of the invention.
Fig. 1 is a perspective view of a drawbar according to an embodiment of the invention.
Fig. 2 is an exploded view of the drawbar in Fig. 1.
Fig. 3 illustrates a leg of the drawbar in Fig. 1.
Fig. 4 illustrates the leg in Fig. 3 in flat state.

### Description of a Preferred Embodiment

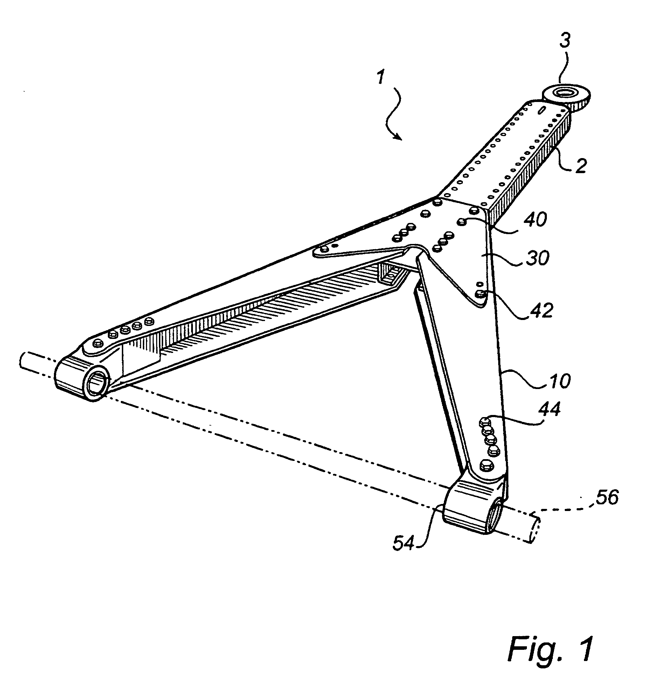

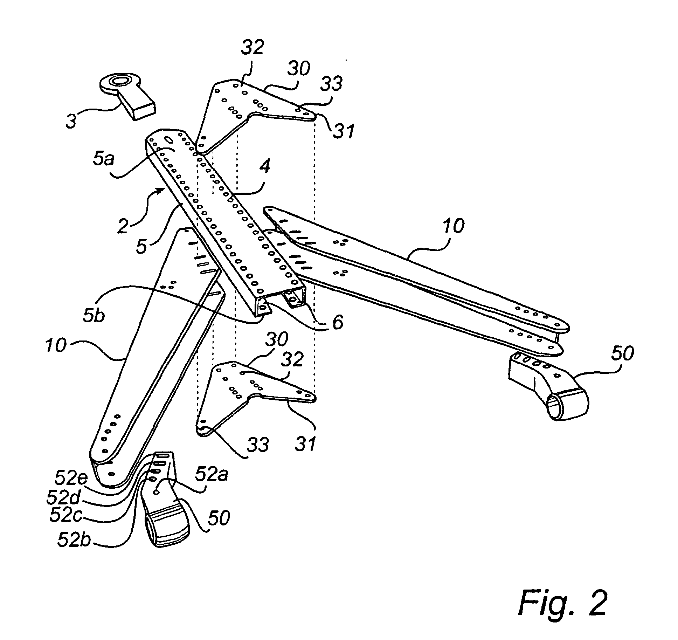

The drawbar 1 shown in Figs 1-2 comprises an elongate front part 2 at one end of which there is a lug 3 for fixing to a coupling device of a traction vehicle. The lug 3 can be arranged on the front part by means of a welded joint or a screw joint. The front part 2 is further formed with a plurality of holes 4 arranged in parallel rows. The front part 2 can be made of a sectional element 5 of steel or like material, and then preferably has a profile allowing each hole to comprise two holes one below the other, formed in the upper side 5a and the underside 5b of the sectional element. It is advantageous for the sectional element to be open at the bottom, in which case the underside 5b may consist of edges 6 on which, for instance, electric cables and air lines can be arranged.

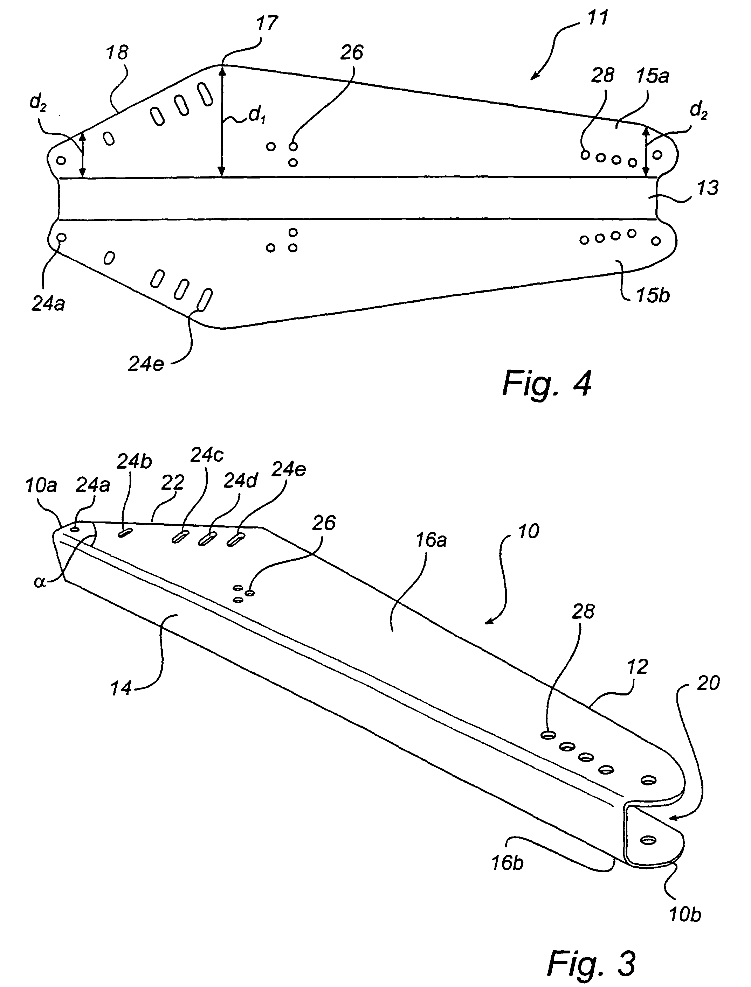

The drawbar further comprises two legs 10 in the form of sectional elements 12 of the kind illustrated in Fig. 3, which are each made by bending a blank 11 of the shape shown in Fig. 4.

The blank 11 can be cut from a steel sheet by means of laser and comprises a central portion 13 which after bending constitutes the web 14 of the sectional element 12. Moreover, the blank comprises a portion 15a, 15b on each side of the central portion, which after bending constitute the upper side 16a and the under side 16b of the sectional element. The portions 15a, 15b are essentially triangular, with an obtuse corner 17 located at a distance d1 from the central portion 13, which in the shown example is approximately twice the width d2 of the portions 15a, 15b at their respective ends. The corner 17 is located at a point 17 between the ends 10a, 10b of the sectional element.

By the bending, the sectional element 12 is formed of the blank 11, the depth of the sectional element, i.e. he distance between the opening 20 and the web 14 of the sectional element 12, varying along the sectional element and corresponding to the above distances d1 and d2. The upper side 16a and the underside 16b of the leg thus consist of said obtuse triangles, the obtuse corners 17 being oriented towards the open side of the sectional element. The obtuse corners 17 are located closer to the front end 10a of the leg than to its rear end 10b, which means that the oblique front short side 22 of the leg, corresponding to the short side 18 of the portions 15a, 15b, forms an acute angle with the web 14 of the leg in the range 20-40 degrees, in the shown example about 30 degrees.

Along this oblique short side 22 a plurality of holes 24a-e are formed in order to enable fixing of the leg to the front part by means of screw joints. Each hole consists of two holes one above the other, one in the upper side 16a of the leg and one in its underside 16b. The hole 24a in the front portion of the leg is circular whereas the other holes 24b-e are of a slightly elongate shape.

Moreover a plurality of, in the shown case three, fixing apertures 26 are formed in the upper side and underside of the leg in a position between its two ends 10a, 10b.

At the rear end 10b of each leg, a plurality of through holes 28 are formed in the same way as at the front end 10a.

With reference once more to Figs 1-2, the drawbar further comprises one or two cover elements in the form of plates 30. The plates 30 are arranged to cover the area where the legs 10 are attached to the front part 2, and besides extend with two tongues 31 a distance over the upper side and underside 16a, 16b of the legs. The plates 30 are formed with a first set of apertures 32 which are adapted to conform with the holes 4 in the front part 2 and the holes 24 in the short sides 22 of the legs 10. Moreover a plurality of, in the shown case two, fixing apertures 33 are formed in each tongue 31 and are adapted to cooperate with the fixing apertures 26 in the legs.

The front part 2, the legs 10 and the cover plates 30 are in the shown example joined by means of ten screw joints 40 which extend from above and down through the upper cover plate 30, the upper sides 16a of the legs, the upper side 5a of the front part, the lower edges 5b of the front part, the undersides 16b of the legs and the lower cover plate 30. Moreover, a screw joint 42 in each leg 10 is arranged through one of the fixing apertures 26 in the leg and one of the fixing apertures 33 in the cover plate.

A fixing means 50 which is adapted to be attached to the trailer is secured to each leg 10 by means of screw joints 44 which extend through the holes 28 in the upper side 16a of the leg, holes 52a-e through the fixing means 50 and the holes 28 in the underside 16b of the leg. The rearmost hole 52a in the fixing means 50 is circular whereas the other holes 52b-e are of a somewhat elongate shape.

The drawbar 1 which is shown in Fig. 1 is loose and not connected to a vehicle. In the following, the mounting of a drawbar on a trailer will be described.

First, the fixing means 50 are secured to the front portion of the trailer. Preferably, the fixing means 50 comprises a cylindrical part 54 which is adapted to be slipped on to a horizontal rod 56 in the trailer. This means that the cylindrical part 54, and thus the entire fixing means, is oriented in conformity with the rod 56. In reality, the rod 56 usually consists of two rods which are aligned with each other.

The legs 10 are then attached to the fixing means 50 by means of the screw joints 44 which are not tightened more firmly than to allow, thanks to the elongate holes 52b-e, some degree of turning of each leg about the screw joint extending through the circular hole 52a.

In the next step, the front part 2 is inserted to the desired longitudinal position between the front ends 10a of the two legs 10 while at the same time the cover plates 30 are positioned. Subsequently the screw joints 40 are arranged through the holes 32, 4 and 24a-e, however without being fully tightened, so as to allow, thanks to the elongate holes 24b-e, some degree of turning of the front part relative to the legs.

The next step consists of fixing and centring the angular position of the front part in relation to the legs, which takes place by arranging screw joints through a pair of coinciding fixing apertures 33, 26 in the cover plate 30 and the leg 10, respectively. Depending on the dimensions of the trailer involved, different fixing apertures coincide; in the shown example, the leg and the cover plate are intended for three different dimensions.

With the front part fixed, all screw joints 40, 42, 44 can now be additionally tightened to obtain very firm screw joints, both between the legs 10 and the front part 2 and between the legs 10 and the fixing means 50.

In the shown example, it is evident that some of the holes 24a-e at the front end 10a of the leg are spaced apart a distance corresponding to two holes 4 in the front part. This design makes it possible to use bore indications made in the cover plate to perform joint boring between existing holes 4 in the front part and through the material of the cover plates 30 and the legs 10. Additional screw joints can now be arranged through these jointly bored holes (not shown), which ensures still greater tensile strength.

It will be appreciated that the above embodiment of the present invention is not to be considered a restriction of the inventive idea according to the appended claims.

For instance, the above-mentioned elongate holes 52b-e which allow turning of the fixing means can instead be formed in the leg, and the holes in the fixing means can be circular. Also the location and shape of other holes can be varied to adjust the drawbar to the current situation.

## Claims

1. A drawbar (1) for trailers, especially heavy-duty trailers, comprising a front part (2) adapted to be fixed to the traction vehicle and two legs (10) adapted to be fixed to the trailer, the legs (10) being joined to the front part (2) by means of screw joints (40) to form a Y-shaped construction,
**characterised in that**
each leg (10) is formed of a plate-shaped blank (11) which is bent to a sectional element with an open profile, such as a U-section, whose depth (d1) is greatest at a point (17) between the ends (10a, 10b) of the legs,
said sectional element having at a first end (10a) a short side (22) extending between the point (17) and the web (14) of the sectional element and forming an acute angle (α) with the web (14), and
said screw joints (40) cooperate with at least two holes (24a-e) formed in the leg (10) along said short side (22).

2. A drawbar as claimed in claim 1, wherein said angle (α) is in the range 20-40 degrees, preferably about 30 degrees.

3. A drawbar as claimed in claim 1 or 2, wherein each leg (10) has a hole (24a) which is formed close to the web (14) of the sectional element, and a hole (24e) formed close to the opening (20) of the sectional element.

4. A drawbar as claimed in any one of the preceding claims, wherein at least one of said holes (24b-e) is elongate to allow adjustment of the angular position of the legs (10) in relation to the front part (2) before the screw joints are fully tightened.

5. A drawbar as claimed in any one of the preceding claims, wherein fixing means (50) are arranged at a second rear end (10b) of each leg (10) by means of screw joints (44) extending through elongate holes (52b-e) in the fixing means (50) to allow some degree of turning of the fixing means (50) in relation to the leg (10) before the screw joints (44) are fully tightened.

6. A drawbar as claimed in any one of the preceding claims, further comprising at least one cover element (30) which is formed with a plurality of apertures and through which said screw joints (40) extend.

7. A drawbar as claimed in claim 6, wherein the cover element (30) comprises two portions (31) each extending a distance in the direction of the rear end (10b) of the respective legs (10), and in which one or more fixing apertures (33) are formed in order to cooperate, with the aid of additional screw joints (42), with one or more fixing apertures (26) which are formed in each leg (10).

8. A drawbar as claimed in claim 6 or 7, wherein the cover element (30) further has bore indications for forming additional holes through the legs (10).

9. A method in mounting a drawbar on a trailer, said drawbar comprising a front part, two legs and two fixing means, the legs being formed according to any one of the preceding claims, said method comprising the steps of
mounting the fixing means (50) on the trailer,
securing by means of screw joints (44) the legs (10) to the fixing means (50),
mounting by means of screw joints (40) the front part (2) and a cover element (30) on the legs (10), and
fixing the angular position of the legs by means of screw joints (42) through fixing apertures (33) in the cover element (30) and fixing apertures (26) in the legs (10).

10. A method as claimed in claim 9, wherein the fixing means (50) are formed with elongate holes (52b-e), and wherein the legs (10) are secured to the fixing means (50) without tightening the screw joints (44) more firmly than to allow some degree of turning of each leg (10) in relation to the fixing means (50).

11. A method as claimed in claim 10, wherein the legs are formed with elongate recesses (24b-e), and wherein the front part (2) is secured to the legs (10) without tightening the screw joints (40) more than to allow some degree of turning of each leg (10) in relation to the front part (2).

12. A method as claimed in claim 11, further comprising the step of jointly making holes in the legs (10) and the cover element (30) according to indications in the cover element (30), and arranging additional screw joints through the thus-formed holes.

## Patentansprüche

1. Deichsel (1) für Anhänger, insbesondere Schwerlastanhänger, mit einem Vorderteil (2), das zur Befestigung an dem Zugfahrzeug eingerichtet ist, und zwei Schenkeln (10), die zur Befestigung an dem Anhänger eingerichtet sind, wobei die Schenkel (10) mit dem Vorderteil (2) mittels Schraubverbindungen (40) so verbunden sind, dass sie eine Y-förmige Konstruktion bilden,
**dadurch gekennzeichnet, dass**
jeder Schenkel (10) aus einem plattenförmigen Rohling (11) ausgebildet ist, der zu einem Teilelement mit einem offenen Profil, wie etwa einem U-Profil, gebogen ist, dessen Tiefe (d₁) an einem Punkt (17) zwischen den Enden (10a, 10b) der Schenkel am größten ist, wobei das Teilelement an einem ersten Ende (10a) eine kurze Seite (22) hat, die zwischen dem Punkt (17) und dem Steg (14) des Teilelements verläuft und einen spitzen Winkel (α) mit dem Steg (14) bildet, und
die Schraubverbindungen (40) mit mindestens zwei Löchern (24a - e) zusammenwirken, die in dem Schenkel (10) entlang der kurzen Seite (22) ausgebildet sind.

2. Deichsel nach Anspruch 1, **dadurch gekennzeichnet, dass** der Winkel (α) in dem Bereich von 20 - 40 Grad liegt und vorzugsweise etwa 30 Grad beträgt.

3. Deichsel nach Anspruch 1 oder 2, **dadurch gekennzeichnet, dass** jeder Schenkel (10) ein Loch (24a), das nahe dem Steg (14) des Teilelements ausgebildet ist, und ein Loch (24e) hat, das nahe der Öffnung (20) des Teilelements ausgebildet ist.

4. Deichsel nach einem der vorhergehenden Ansprüche, **dadurch gekennzeichnet, dass** mindestens eines der Löcher (24b - e) länglich ist, um die Einstellung der Winkelstellung der Schenkel (10) in Bezug auf das Vorderteil (2) zu ermöglichen, bevor die Schraubverbindungen vollständig festgezogen werden.

5. Deichsel nach einem der vorhergehenden Ansprüche, **dadurch gekennzeichnet, dass** Befestigungsmittel (50) an einem zweiten hinteren Ende (10b) jedes Schenkels (10) mittels Schraubverbindungen (44) angeordnet sind, die durch längliche Löcher (52b - e) in den Befestigungsmitteln (50) verlaufen, um ein gewisses Maß an Drehung der Befestigungsmittel (50) in Bezug auf die Schenkel (10) zu ermöglichen, bevor die Schraubverbindungen (44) vollständig festgezogen werden.

6. Deichsel nach einem der vorhergehenden Ansprüche, die weiterhin mindestens ein Deckelement (30) aufweist, das mit einer Vielzahl von Öffnungen ausgebildet ist und durch das die Schraubverbindungen (40) verlaufen.

7. Deichsel nach Anspruch 6, **dadurch gekennzeichnet, dass** das Deckelement (30) zwei Teile (31) aufweist, die jeweils eine Strecke in Richtung des hinteren Endes (10b) der einzelnen Schenkel (10) verlaufen und in denen eine oder mehrere Befestigungsöffnungen (33) so ausgebildet sind, dass sie mit Hilfe von zusätzlichen Schraubverbindungen (42) mit einer oder mehreren Befestigungsöffnungen (26), die in jedem Schenkel (10) ausgebildet sind, zusammenwirken.

8. Deichsel nach Anspruch 6 oder 7, **dadurch gekennzeichnet, dass** das Deckelement (30) weiterhin Bohrmarkierungen zum Herstellen von zusätzlichen Löchern durch die Schenkel (10) hat.

9. Verfahren zum Montieren einer Deichsel an einen Anhänger, wobei die Deichsel ein Vorderteil, zwei Schenkel und zwei Befestigungsmittel aufweist, wobei die Schenkel nach einem der vorhergehenden Ansprüche ausgebildet sind, mit den Schritten:
Montieren der Befestigungsmittel (50) an den Anhänger;
Befestigen der Schenkel (10) mittels Schraubverbindungen (44) an den Befestigungsmitteln (50);
Montieren des Vorderteils (2) und eines Deckelements (30) mittels Schraubverbindungen (40) an den Schenkeln (10) und
Fixieren der Winkelstellung der Schenkel mittels Schraubverbindungen (42) durch Befestigungsöffnungen (33) in dem Deckelement (30) und Befestigungsöffnungen (26) in den Schenkeln (10).

10. Verfahren nach Anspruch 9, **dadurch gekennzeichnet, dass** die Befestigungsmittel (50) mit Langlöchern (52b - e) ausgebildet werden und dass die Schenkel (10) an den Befestigungsmittel (50) befestigt werden, ohne die Schraubverbindungen (44) fester anzuziehen, als dass ein gewisses Maß an Drehung jedes Schenkels (10) in Bezug auf die Befestigungsmittel (50) möglich ist.

11. Verfahren nach Anspruch 10, **dadurch gekennzeichnet, dass** die Schenkel mit länglichen Aussparungen (24b - e) ausgebildet werden und dass das Vorderteil (2) an den Schenkeln (10) befestigt wird, ohne die Schraubverbindungen (40) fester anzuziehen, als dass ein gewisses Maß an Drehung jedes Schenkels (10) in Bezug auf das Vorderteil (2) möglich ist.

12. Verfahren nach Anspruch 11, das weiterhin den Schritt des gemeinsamen Herstellens von Löchern in den Schenkeln (10) und dem Deckelement (30) entsprechend Markierungen in dem Deckelement (30) und des Anordnens von zusätzlichen Schraubverbindungen durch die so hergestellten Löcher aufweist.

## Revendications

1. Barre de traction (1) pour des remorques, particulièrement des remorques pour fortes charges, comprenant une partie avant (2) adaptée de façon à être fixée au véhicule de traction et deux jambes (10) étant jointes à la partie avant (2) au moyen d'un assemblage par vis (40) pour former une construction de forme en Y,
**caractérisée en ce que**
chaque jambe (10) est formée d'une découpe en forme de plaque (11) qui est pliée en un élément de section avec un profil ouvert, tel qu'une section en U, dont la profondeur (d1) est plus grande en un point (17) entre les extrémités (10a, 10b) des jambes,
ledit élément de section ayant à une première extrémité (10a) un côté court (22) qui s'étend entre le point (17) et la toile (14) de l'élément de section et qui forme un angle aigu (α) avec la toile (14), et
lesdits assemblages à vis (40) coopèrent avec au moins deux trous (24a à e) formés dans la jambe (10) le long dudit côté court (22).

2. Barre de traction selon la revendication 1, dans laquelle ledit angle (α) est dans la fourchette de 20 à 40 degrés, de préférence 30 degrés environ.

3. Barre de traction selon la revendication 1 ou 2, dans laquelle chaque jambe (10) a un trou (24a) qui est formé près de la jambe (14) de l'élément de section, et un trou (24e) formé près de l'ouverture (20) de l'élément se section.

4. Barre de traction selon l'une quelconque des revendications précédentes, dans laquelle au moins un desdits trous (24b à e) est allongé pour permettre l'ajustement de la position angulaire des jambes (10) en relation avec la partie de face (2) avant les assemblages à vis sont complètement resserrés.

5. Barre de traction selon l'une quelconque des revendications précédentes, dans laquelle les moyens de fixation (50) sont disposés à une deuxième extrémité arrière (10b) de chaque jambe (10) au moyen d'assemblages à vis (44) qui s'étendent à travers les trous allongés (52b à e) dans le moyen de fixation (50) pour permettre quelques degrés de rotation du moyen de fixation (50) par rapport à la jambe (10) avant que les assemblages à vis (44) soient complètement resserrés.

6. Barre de traction selon l'une quelconque des revendications précédentes, comprenant en outre au moins un élément de couvercle (30) qui est formé avec une pluralité d'ouvertures et à travers lesquelles lesdits assemblages à vis (40) s'étendent.

7. Barre de traction selon la revendication 6, dans laquelle l'élément de couvercle (30) comprend deux parties (31) s'étendant chacune d'une distance dans la direction de l'extrémité arrière (10b) des jambes respectives (10), et dans lesquelles une ou plusieurs ouvertures de fixation (33) sont formées de façon à coopérer, avec l'aide d'assemblages à vis additionnels (42), avec une ou plusieurs ouvertures (26) qui sont formées dans chaque jambe (10).

8. Barre de traction selon la revendication 6 ou 7, dans laquelle l'élément de couvercle (30) a en outre des indications d'alésage pour former des trous additionnels à travers les jambes (10).

9. Procédé de montage d'une barre sur une remorque, ladite barre comprenant une partie avant, deux jambes et deux moyens de fixation, les jambes étant formées selon l'une quelconque des revendications précédentes, ledit procédé comprenant les étapes de
montage du moyen de fixation (50) sur la remorque,
fixation au moyen d'assemblages par vis (44) des jambes (10) au moyen de fixation (50),
montage au moyen d'assemblages par vis (40) de la partie avant (2) et d'un élément de couvercle (30) sur les jambes (10), et
fixation de la position angulaire des jambes au moyen d'assemblages par vis (30) à travers des ouvertures de fixation (33) dans l'élément de couvercle (30) et d'ouvertures de fixation (26) dans les jambes (10).

10. Procédé selon la revendication 9, dans lequel on forme les moyens de fixation (50) avec des trous allongés (52b à e), et dans lequel les jambes (10) sont fixés aux moyens de fixation (50) sans resserrer les assemblages à vis (44) plus fermement que pour permettre quelques degrés de rotation de chaque jambe (10) en relation avec les moyens de fixation (50).

11. Procédé selon la revendication 10, dans lequel on forme les jambes avec des évidements allongés (24b à e), et dans lequel la partie avant (2) est fixée aux jambes (10) sans plus resserrer les assemblages par vis (40) que pour permettre quelques degrés de rotation de chaque jambe (10) en relation avec la partie avant (2).

12. Procédé selon la revendication 11, comprenant en outre l'étape de faire des trous communs dans les jambes (10) et l'élément de couvercle (30) selon les indications dans l'élément de couvercle (30), et de disposer des assemblages à vis additionnels à travers les trous ainsi formés.
